# EUROPÄISCHE PATENTSCHRIFT

(11) **EP 3 825 151 B1**
(45) Veröffentlichungstag und Bekanntmachung des Hinweises auf die Patenterteilung: **07.09.2022**
(21) Anmeldenummer: 20201526.9
(22) Anmeldetag: 13.10.2020
(51) Int. Cl.: B60C 11/13, B60C 11/03, B60C 11/04

(54) **FAHRZEUGLUFTREIFEN MIT EINEM LAUFSTREIFEN**
PNEUMATIC TYRE WITH TREAD
PNEU AVEC BANDE DE ROULEMENT

(30) Priorität: 25.11.2019 DE 102019218119
(43) Veröffentlichungstag der Anmeldung: 26.05.2021
(73) Patentinhaber: Continental Reifen Deutschland GmbH, 30165 Hannover (DE)
(72) Erfinder: Schwenke, Andreas - c/o Continental AG, 30419 Hannover (DE); Kristen, Florian - c/o Continental AG, 30419 Hannover (DE); Yeo, Chun Yi - c/o Continental AG, 30419 Hannover (DE); Rother, Helge - c/o Continental AG, 30419 Hannover (DE)
(74) Vertreter: Continental Corporation

(56) Entgegenhaltungen:
- WO-A1-2009/082394
- CN-A- 106 042 787
- DE-A1-102014 205 595
- JP-A- 2002 301 908
- JP-A- 2008 213 673

## Beschreibung

Die Erfindung betrifft einen Nutzfahrzeugreifen in Radialbauart mit einem Laufstreifen mit auf Profiltiefe ausgeführten Umfangsrillen und zumindest einer im mittleren Laufstreifenbereich in Umfangsrichtung umlaufenden Profilrippe mit durch Querrillen voneinander getrennten Profilblöcken, wobei sich die Querrillen unter einem Winkel von bis zu 45° zur axialen Richtung erstrecken, zumindest über den Großteil ihrer Erstreckung gerade verlaufen, an der Laufstreifenperipherie gerade verlaufende Randkanten aufweisen und von zwei Blockflanken und einem gerundeten Rillengrund begrenzt sind, wobei die Blockflanken der Querrillen in der Erstreckungsrichtung der Querrillen in Zick-Zack-Form mit Vorsprüngen und Vertiefungen verlaufen.

Ein solcher gattungsgemäßer Nutzfahrzeugreifen ist aus der DE 10 2014 205595 A1 bekannt.

Nutzfahrzeugreifen sind mit unterschiedlich gestalteten Laufstreifen bekannt. So ist beispielsweise der Continental Reifen Conti Hybrid HD3 (https://www.continental-reifen.de/bus-und-lkw/reifen/goods/conti-hybrid-hd3-22-5, abgerufen am 12. November 2019) ein Reifen der eingangs genannten Art, dessen Laufstreifen sechs Profilrippen aufweist, die durch weitgehend gerade verlaufende Querrillen in Profilblöcke gegliedert sind. Weitere relevante Dokumente sind JP2008213673A, JP2002301908A, WO2009/082394A1 sowie CN106042787A.

Es ist ferner bekannt, gerade verlaufende Randkanten von Querrillen in Profilrippen von Laufstreifen von Nutzfahrzeugreifen zusätzlich anzufasen, um derart die Haltbarkeit der Profilblöcke zu verbessern, indem das Entstehen von Rissen, Schnitten und Abrissen weitgehend vermieden wird. Gerade verlaufende Randkanten bieten im Hinblick auf Traktion bei Nässe, Schnee und Eis jedoch keine optimale Performance.

Der Erfindung liegt daher die Aufgabe zugrunde, bei einem Nutzfahrzeugreifen eingangs genannter Art die Randkanten- und Blockflankenbereiche bei Querrillen derart zu gestalten, dass die Profilblöcke eine gute Haltbarkeit zu Beginn des Reifenlebens aufweisen und über die Reifenlebensdauer sich die Nassgriffeigenschaften und die Schneegriffeigenschaften merklich verbessern.

Gelöst wird die gestellte Aufgabe erfindungsgemäß dadurch, dass sich die Blockflanken der Querrillen in radialer Richtung aus zumindest zwei aufeinanderfolgenden Flankenabschnitten zusammensetzen, welche jeweils dem Zick-Zack-Verlauf folgende Flächenelemente aufweisen, wobei die Flächenelemente im radial äußersten Flankenabschnitt den größten Winkel mit der radialen Richtung einschließen und die Flächenelemente im radial innersten Flankenabschnitt den kleinsten Winkel mit der radialen Richtung einschließen.

An die gerade verlaufenden Randkanten der Profilblöcke bei Querrillen schließen daher auf spezielle Weise in Zick-Zack-Form verlaufende Blockflanken an, wobei die Zick-Zack-Form über die Flankenabschnitte hinweg bis zum Rillengrund reicht. Schon bei geringem Abrieb des Laufstreifens bilden sich in Draufsicht in Zick-Zack-Form verlaufende Randkanten aus, deren Länge somit die Länge der ursprünglich gerade verlaufenden Randkanten übersteigt, wodurch der Reifen in der Lage ist, auf Nässe und Schnee größere Drehmomente zu übertragen. Darüber hinaus wird durch den Zick-Zack-Verlauf der Blockflanken im Vergleich zu üblich ausgeführten Blockflanken ein Verfangen von Steinen in den Querrillen erschwert.

Besonders bevorzugt ist eine Ausführung, bei welcher sich die Blockflanken der Querrillen aus drei in radialer Richtung aufeinanderfolgenden Flankenabschnitten zusammensetzen. Dadurch ist es möglich, die Blockflanken besonders vorteilhaft an die mit fortschreitendem Laufstreifenabrieb zunehmende Blocksteifigkeit anzupassen.

Für einen gleichmäßigen Laufstreifenabrieb ist es vorteilhaft, wenn jeder Flankenabschnitt in radialer Richtung bis in eine konstante Tiefe reicht.

Auf den Vorsprüngen der Zick-Zack-Form und in den Vertiefungen der Zick-Zack-Form sind jeweils Knicklinien gebildet, deren Verlauf in radialer Richtung bevorzugt derart ist, dass in jedem Flankenabschnitt der Winkel, den die Knicklinien auf den Vorsprüngen mit der radialen Richtung einschließen, größer ist als der Winkel, den die Knicklinien in den Vertiefungen mit der radialen Richtung einschließen, wobei diese Winkel im radial äußersten Flankenabschnitt jeweils am größten und im radial innersten Flankenabschnitt am kleinsten sind. Diese Ausgestaltung sorgt dafür, dass gute Nassgriff- und Schneegriffeigenschaften über die Lebensdauer des Reifens erhalten bleiben.

In diesem Zusammenhang ist es von Vorteil, dass bei einer Ausführung mit drei Flankenabschnitten in den Blockflanken der Querrillen die Knicklinien auf den Vorsprüngen im radial äußersten Flankenabschnitt unter einem Winkel von 25° bis 50° zur radialen Richtung, im mittleren Flankenabschnitt unter einem Winkel von 15° bis 35° zur radialen Richtung und im radial innersten Flankenabschnitt unter einem Winkel von 2° bis 10° zur radialen Richtung verlaufen. Die Knicklinien in den Vertiefungen verlaufen dabei bevorzugt im radial äußersten Flankenabschnitt unter einem Winkel von 20° bis 40° zur radialen Richtung, im mittleren Flankenabschnitt unter einem Winkel von 10° bis 20° zur radialen Richtung und im radial innersten Flankenabschnitt unter einem Winkel von 0° bis 6° zur radialen Richtung.

Für gute Nassgriff- und Schneegriffeigenschaften über die Lebensdauer des Reifens ist es ferner vorteilhaft, wenn der radial äußerste Flankenabschnitt in radialer Richtung bis in eine konstante Tiefe von 10 % bis 30 % der Tiefe der Querrille und der mittlere Flankenabschnitt bis in eine konstante Tiefe von 40 % bis 70 % der Tiefe der Querrille reicht.

Bevorzugt ist ferner diesbezüglich eine Ausgestaltung der Zick-Zack-Form, bei welcher die Flächenelemente in jedem Flankenabschnitt an den Knicklinien unter stumpfen Winkeln von 130° bis 170° aneinander anschließen.

Weitere Merkmale, Vorteile und Einzelheiten der Erfindung werden nun anhand der zum Teil schematischen Zeichnung näher beschrieben. Dabei zeigen
Fig. 1 eine Draufsicht auf einen Umfangsabschnitt einer Profilrippe eines Laufstreifens eines Nutzfahrzeugreifens,
Fig. 2 eine Schrägansicht einer Querrille gemäß der in Fig. 1 mit dem Pfeil P angedeuteten Sichtrichtung,
Fig. 3 und Fig. 4 Ansichten von Knicklinien und
Fig. 5 bis Fig. 7 Draufsichten auf eine Querrille in unterschiedlichen, jeweils weiter fortgeschrittenen Abriebzuständen des Laufstreifens.

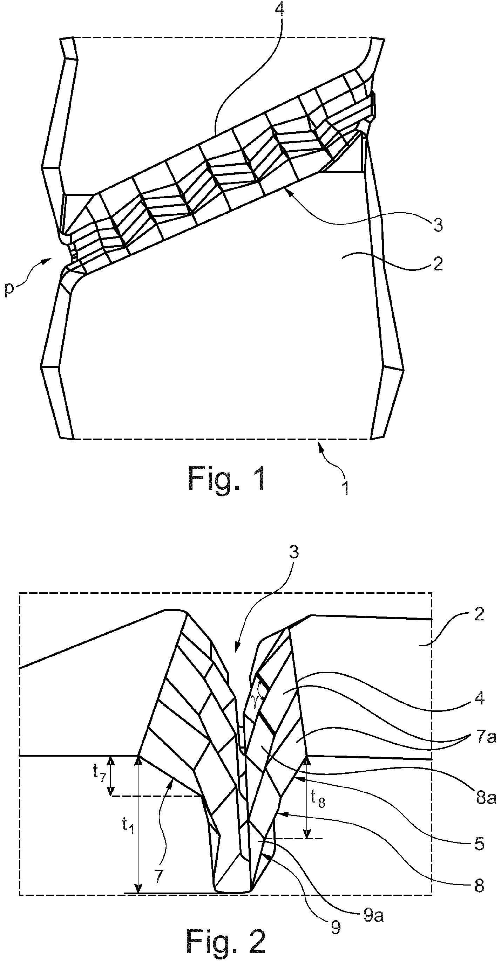

Fig. 1 zeigt einen Umfangabschnitt einer in Profilblöcke 2 gegliederten Profilrippe 1 eines Laufstreifens eines Nutzfahrzeugreifens, welcher insbesondere ein Reifen in Radialbauart für Lastkraftwagen oder Busse ist. Die in Umfangsrichtung der Profilrippe 1 aufeinanderfolgenden Profilblöcke 2 sind voneinander jeweils durch eine Querrille 3 getrennt. In Fig. 1 sind jeweils von zwei in Umfangsrichtung aufeinanderfolgenden Profilblöcken 2 nur Teilbereiche dargestellt. Seitlich der Profilrippe 1 verlaufen nicht dargestellte, in der vorgesehenen Profiltiefe, die je nach Reifentyp insbesondere 12,0 mm bis 24,0 mm beträgt, ausgeführte Umfangsrillen. Die Profilrippe 1 ist eine im mittleren Laufstreifenbereich verlaufende Profilrippe, sodass der Laufstreifen zumindest noch zwei schulterseitig verlaufende Profilrippen, die nicht dargestellt sind, sowie gegebenenfalls ein bis fünf weitere mittlere Profilrippen aufweist, die ebenfalls gemäß der oder analog zur dargestellten Profilrippe 1 ausgestaltet sein können.

Die Querrillen 3 verlaufen unter einem spitzen Winkel zur axialen Richtung, welcher insbesondere 10° bis 45° beträgt, und innerhalb der Profilrippe 1 parallel zueinander. An der Laufstreifenperipherie bzw. der Außenfläche der Profilblöcke 2 sind die Querrillen 3 von zwei Randkanten 4 begrenzt, die über zumindest den Großteil ihrer Erstreckung gerade und bei der gezeigten Ausführung auch parallel verlaufen. Der gegenseitige Abstand der Randkanten 4 entspricht der Breite bi der Querrillen 3 im Neuzustand des Reifens und beträgt insbesondere 10,0 mm bis 14,0 mm. Die Querrillen 3 weisen ferner über ihre Erstreckung eine Tiefe ti (Fig. 2) auf, die zumindest 80 % der Profiltiefe entspricht.

Jede Querrille 3 ist von Blockflanken 5, die jeweils von einer der Randkanten 4 ausgehen, und einem gerundeten Rillengrund 6 (Fig. 2) begrenzt. Die beiden Blockflanken 5 sind auf übereinstimmende Weise und wie nachfolgend näher beschrieben wird dreidimensional mit Vorsprüngen und Vertiefungen strukturiert, wobei die Struktur auf der einen Blockflanke 5 zur Struktur auf der gegenüberliegenden Blockflanke 5 korrespondierend ausgeführt ist, sodass einem als Vertiefung ausgebildeten Strukturelement auf der einen Blockflanke 5 auf der gegenüberliegenden Blockflanke 5 ein gegengleich als Vorsprung ausgebildetes Strukturelement entspricht.

Die erwähnte Struktur aus Vorsprüngen und Vertiefungen ergibt sich aus einem speziellen Zick-Zack-Verlauf der Blockflanken 5, nämlich aus einer Zick-Zack-Anordnung von viereckigen, insbesondere nahezu rechteckigen Flächenelementen 7a, 8a, 9a in drei in radialer Richtung aufeinanderfolgenden Flankenabschnitten 7, 8, 9, aus welchen sich jede Blockflanke 5 zusammensetzt, einem an die Randkante 4 anschließenden radial äußersten Flankenabschnitt 7, einem mittleren Flankenabschnitt 8 und einem radial innersten Flankenabschnitt 9, welcher unmittelbar an den Rillengrund 6 anschließt. Der radial äußere Flankenabschnitt 7 reicht in radialer Richtung bis in eine konstante Tiefe t₇ von 10 % bis 30 % der Tiefe ti der Querrille 3, der mittlere Flankenabschnitt 8 bis in eine konstante Tiefe t₈ von 40 % bis 70 % der Tiefe ti der Querrille 3.

In jedem Flankenabschnitt 7, 8, 9 sind die Flächenelemente 7a, 8a und 9a in der Erststreckungsrichtung der Querrille 3 in der Zick-Zack-Form aneinandergereiht, wobei durch die gleiche Anordnung der Flächenelemente 7a, 8a und 9a sämtliche Flächenelemente 8a in radialer Richtung unmittelbar an die Flächenelemente 7a und die Flächenelemente 9a unmittelbar an die Flächenelemente 8a anschließen. In jedem Flankenabschnitt 7, 8 und 9 verlaufen die Flächenelemente 7a, 8a und 9a unter voneinander abweichenden Winkeln zur radialen Richtung, derart, dass die Flächenelemente 7a im radial äußersten Flankenabschnitt 7 den größten Winkel mit der radialen Richtung einschließen und die Flächenelemente 9a im radial innersten Flankenabschnitt 9 den kleinsten Winkel mit der radialen Richtung einschließen. Diese Ausgestaltung wird nun anhand der in radialer Richtung bis zum Rillengrund 7 durchgehend vorhandenen Knicklinien 10 und 11 des Zick-Zack-Verlaufes beschrieben. Die Knicklinien 10 sind jene Knicklinien, die jeweils zwischen zwei Flächenelementen 7a, 8a und 9a verlaufen, die einen in das Querrilleninnere ragenden Vorsprung im Zick-Zack-Verlauf an der Blockflanke 5 bilden, die Knicklinien 11 sind jene Knicklinien, die jeweils zwischen zwei Flächenelementen 7a, 8a und 9a verlaufen, die an der Blockflanke 5 eine Vertiefung im Zick-Zack-Verlauf bilden. Die meisten Flächenelemente 7a, 8a und 9 sind sowohl an einem Vorsprung als auch an einer Vertiefung beteiligt.

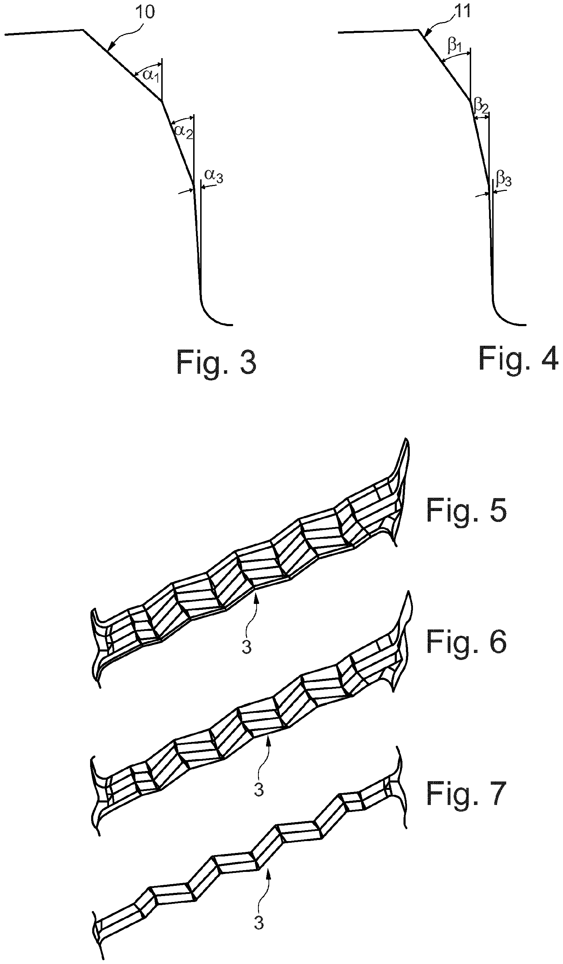

Wie Fig. 3 und 4 zeigen, verläuft im radial äußersten Flankenabschnitt 7 die Knicklinie 10 unter einem Winkel α₁ zur radialen Richtung, die Knicklinie 11 unter einem Winkel β₁, wobei α₁ 25° bis 50° beträgt und β₁ um mindestens 5° kleiner ist als α₁ und 20° bis 40° beträgt. Im mittleren Flankenabschnitt 8 verläuft die Knicklinie 10 unter einem Winkel α₂ zur radialen Richtung, die Knicklinie 11 unter einem Winkel β₂, wobei α₂ 15° bis 35° beträgt und β₂ 10° bis 20° beträgt und um mindestens 5° kleiner ist als α₂. Im radial innersten Flankenabschnitt 9 verläuft die Knicklinie 10 unter einem Winkel α₃ zur radialen Richtung, die Knicklinie 11 unter einem Winkel β₃, wobei α₃ 2° bis 10° beträgt und β₃ um mindestens 2° kleiner ist als α₃ und 0° bis 6° beträgt. Es ist daher α₁ > α₂ > α₃ und es ist β₁ > β₂ > β₃.

Die Flächenelemente 7a, 8a und 9a weisen in der Erstreckungsrichtung der Querrille 3 beispielsweise eine Länge l₁ von 5,0 mm bis 7,0 mm, in radialer Richtung beispielsweise eine Länge l₂ von 4,0 mm bis 6,0 mm auf.

Der Zick-Zack-Verlauf der einzelnen Flächenelemente 7a, 8a und 9a ist ferner derart, dass die Flächenelemente 7a, 8a, 9a in jedem Flankenabschnitt 7, 8, 9, 10 unter stumpfen Winkeln γ aneinander anschließen, wobei γ in der Größenordnung von 130° bis 170° beträgt.

Fig. 5 bis Fig. 7 zeigen jeweils eine Draufsicht auf die Querrille 3 in unterschiedlichen Abriebzuständen, Fig. 5 nach einem Laufstreifenabrieb von ca. 15% der Tiefe ti, Fig. 6 nach einem Abrieb von ca. 30% der Tiefe ti und Fig. 7 nach einem Abrieb von ca. 55% der Tiefe ti. Die vorteilhafte Zick-Zack-Form aus Flächenelementen bleibt während des Abriebes des Laufstreifens somit erhalten.

### Bezugszeichenliste

- 1: Profilrippe
- 2: Profilblock
- 3: Querrille
- 4: Randkante
- 5: Blockflanke
- 6: Rillengrund
- 7: äußerer Flankenabschnitt
- 7a: Flächenelement
- 8: mittlerer Flankenabschnitt
- 8a: Flächenelement
- 9: innerer Flankenabschnitt
- 9a: Flächenelement
- 10, 11: Knicklinie
- α₁, α₂, α₃: Winkel
- β₁, β₂, β₃: Winkel
- γ: Winkel
- b₁: Breite
- t₁: Tiefe
- t₇, t₈: Tiefe

## Patentansprüche

1. Nutzfahrzeugreifen in Radialbauart mit einem Laufstreifen mit auf Profiltiefe ausgeführten Umfangsrillen und zumindest einer im mittleren Laufstreifenbereich in Umfangsrichtung umlaufenden Profilrippe (1) mit durch Querrillen (3) voneinander getrennten Profilblöcken (2), wobei sich die Querrillen (3) unter einem Winkel von bis zu 45° zur axialen Richtung erstrecken, zumindest über den Großteil ihrer Erstreckung gerade verlaufen, an der Laufstreifenperipherie gerade verlaufende Randkanten (4) aufweisen und von zwei Blockflanken (5) und einem gerundeten Rillengrund (6) begrenzt sind,
wobei
die Blockflanken (5) der Querrillen (3) in der Erstreckungsrichtung der Querrillen (3) in Zick-Zack-Form mit Vorsprüngen und Vertiefungen verlaufen,
**dadurch gekennzeichnet,**
**dass** die Blockflanken (5) der Querrillen (3)
sich dabei in radialer Richtung aus zumindest zwei aufeinanderfolgenden Flankenabschnitten (7, 8, 9) zusammensetzen, welche jeweils dem Zick-Zack-Verlauf folgende Flächenelemente (7a, 8a, 9a) aufweisen, wobei die Flächenelemente (7a) im radial äußersten Flankenabschnitt (7) den größten Winkel mit der radialen Richtung einschließen und die Flächenelemente (9a) im radial innersten Flankenabschnitt (9) den kleinsten Winkel mit der radialen Richtung einschließen.

2. Nutzfahrzeugreifen nach Anspruch 1, **dadurch gekennzeichnet, dass** sich die Blockflanken (5) der Querrillen (3) aus drei in radialer Richtung aufeinanderfolgenden Flankenabschnitten (7, 8, 9) zusammensetzen.

3. Nutzfahrzeugreifen nach Anspruch 1 oder 2, **dadurch gekennzeichnet, dass** jeder Flankenabschnitt (7, 8, 9) in radialer Richtung bis in eine konstante Tiefe (t₇, t₈) reicht.

4. Nutzfahrzeugreifen nach einem der Ansprüche 1 bis 3, **dadurch gekennzeichnet, dass** auf Vorsprüngen der Zick-Zack-Form und in Vertiefungen der Zick-Zack-Form jeweils Knicklinien (10, 11) gebildet sind, wobei in jedem Flankenabschnitt (7, 8, 9) der Winkel (α₁, α₂, a₃), den die Knicklinien (10) auf den Vorsprüngen mit der radialen Richtung einschließen, größer ist als der Winkel (β₁, β₂, β₃), den die Knicklinien (11) in den Vertiefungen mit der radialen Richtung einschließen, wobei diese Winkel im radial äußersten Flankenabschnitt (7) jeweils am größten und im radial innersten Flankenabschnitt (9) am kleinsten sind.

5. Nutzfahrzeugreifen nach Anspruch 4, **dadurch gekennzeichnet, dass** bei drei Flankenabschnitten (7, 8, 9) an den Blockflanken (5) der Querrillen (3) die Knicklinien (10) auf den Vorsprüngen im radial äußersten Flankenabschnitt (7) unter einem Winkel (α₁) von 25° bis 50° zur radialen Richtung, im mittleren Flankenabschnitt (8) unter einem Winkel (α₂) von 15° bis 35° zur radialen Richtung und im radial innersten Flankenabschnitt (9) unter einem Winkel (α₃) von 2° bis 10° zur radialen Richtung verlaufen.

6. Nutzfahrzeugreifen nach Anspruch 4 oder 5, **dadurch gekennzeichnet, dass** bei drei Flankenabschnitten(7, 8, 9) an den Blockflanken (5) der Querrillen (3) die Knicklinien (11) in den Vertiefungen im radial äußersten Flankenabschnitt (7) unter einem Winkel (ßi) von 20° bis 40° zur radialen Richtung, im mittleren Flankenabschnitt (8) unter einem Winkel (β₂) von 10° bis 20° zur radialen Richtung und im radial innersten Flankenabschnitt (9) unter einem Winkel (β₃) von 0° bis 6° zur radialen Richtung verlaufen.

7. Nutzfahrzeugreifen nach einem der Ansprüche 1 bis 6, **dadurch gekennzeichnet, dass** bei drei Flankenabschnitten (7. 8, 9) an den Blockflanken (5) der Querrillen (3) der radial äußerste Flankenabschnitt (7) in radialer Richtung bis in eine konstante Tiefe (t₇) von 10 % bis 30 % der Tiefe (t₁) der Querrille (3) und der mittlere Flankenabschnitt (8) bis in eine konstante Tiefe (t₈) von 40 % bis 70 % der Tiefe (t₁) der Querrille (3) reicht.

8. Nutzfahrzeugreifen nach einem der Ansprüche 1 bis 7, **dadurch gekennzeichnet, dass** die Flächenelemente (8a, 9a, 10a) in jedem Flankenabschnitt (7, 8, 9) an den Knicklinien (10, 11) unter stumpfen Winkeln (γ) von 130° bis 170° aneinander anschließen.

## Claims

1. Utility vehicle tyre of radial construction with a tread strip with circumferential grooves which are configured to profile depth, and with at least one profile rib (1) which runs around in the circumferential direction in the middle tread strip region and has profile blocks (2) which are separated from one another by way of transverse grooves (3), the transverse grooves (3) extending at an angle of up to 45° with respect to the axial direction, running straight at least over the majority of their extent, having outer edges (4) which run straight on the tread strip periphery, and being delimited by two block flanks (5) and a rounded groove bottom (6), the block flanks (5) of the transverse grooves (3) running with projections and depressions in a zigzag shape in the direction of extent of the transverse grooves (3), **characterized in that** the block flanks (5) of the transverse grooves (3) consist here in the radial direction of at least two flank portions (7, 8, 9) which follow one another and have surface elements (7a, 8a, 9a) which in each case follow the zigzag course, the surface elements (7a) in the radially outermost flank portion (7) enclosing the greatest angle with the radial direction, and the surface elements (9a) in the radially innermost flank portion (9) enclosing the smallest angle with the radial direction.

2. Utility vehicle tyre according to Claim 1, **characterized in that** the block flanks (5) of the transverse grooves (3) consist of three flank portions (7, 8, 9) which follow one another in the radial direction.

3. Utility vehicle tyre according to Claim 1 or 2, **characterized in that** each flank portion (7, 8, 9) extends in the radial direction as far as into a constant depth (t₇, t₈).

4. Utility vehicle tyre according to one of Claims 1 to 3, **characterized in that** bending lines (10, 11) are formed in each case on projections of the zigzag shape and in depressions of the zigzag shape, the angle (α₁, α₂, α₃) enclosed by the bending lines (10) on the projections with the radial direction being greater in each flank portion (7, 8, 9) than the angle (β₁, β₂, β₃) enclosed by the bending lines (11) in the depressions with the radial direction, these angles in each case being greatest in the radially outermost flank portion (7) and being smallest in the radially innermost flank portion (9).

5. Utility vehicle tyre according to Claim 4, **characterized in that**, in the case of three flank portions (7, 8, 9) on the block flanks (5) of the transverse grooves (3), the bending lines (10) on the projections run in the radially outermost flank portion (7) at an angle (α₁) of from 25° to 50° with respect to the radial direction, run in the middle flank portion (8) at an angle (α₂) of from 15° to 35° with respect to the radial direction, and run in the radially innermost flank portion (9) at an angle (α₃) of from 2° to 10° with respect to the radial direction.

6. Utility vehicle tyre according to Claim 4 or 5, **characterized in that**, in the case of three flank portions (7, 8, 9) on the block flanks (5) of the transverse grooves (3), the bending lines (11) in the depressions run in the radially outermost flank portion (7) at an angle (β₁) of from 20° to 40° with respect to the radial direction, run in the middle flank portion (8) at an angle (β₂) of from 10° to 20° with respect to the radial direction, and run in the radially innermost flank portion (9) at an angle (β₃) of from 0° to 6° with respect to the radial direction.

7. Utility vehicle tyre according to one of Claims 1 to 6, **characterized in that**, in the case of three flank portions (7, 8, 9) on the block flanks (5) of the transverse grooves (3), the radially outermost flank portion (7) extends in the radial direction as far as into a constant depth (t₇) of from 10% to 30% of the depth (t₁) of the transverse groove (3), and the middle flank portion (8) extends as far as into a constant depth (t₈) of from 40% to 70% of the depth (t₁) of the transverse groove (3).

8. Utility vehicle tyre according to one of Claims 1 to 7, **characterized in that** the surface elements (8a, 9a, 10a) in each flank portion (7, 8, 9) adjoin one another at the bending lines (10, 11) at obtuse angles (γ) of from 130° to 170°.

## Revendications

1. Pneu de véhicule utilitaire à structure radiale comportant une bande de roulement dotée de rainures circonférentielles réalisées à la profondeur de profilé et d'au moins une rainure profilée (1) s'étendant dans la direction circonférentielle dans la région de bande de roulement centrale et dotée de blocs profilés (2) séparés les uns des autres par des rainures transversales (3), les rainures transversales (3) s'étendant suivant un angle jusqu'à 45° par rapport à la direction axiale, s'étendant de manière rectiligne au moins sur la majeure partie de leur étendue, présentant des arêtes de bord (4) s'étendant de manière rectiligne à la périphérie de la bande de roulement et étant limitées par deux flancs de bloc (5) et un fond de rainure (6) arrondi, les flancs de bloc (5) des rainures transversales (3) s'étendant en forme de zigzag avec des saillies et des renfoncements dans la direction d'étendue des rainures transversales (3),
**caractérisé en ce que**
les flancs de bloc (5) des rainures transversales (3) se composent en l'occurrence dans la direction radiale d'au moins deux parties de flanc (7, 8, 9) successives, lesquelles présentent respectivement des éléments de surface (7a, 8a, 9a) suivant l'allure en zigzag, les éléments de surface (7a) formant le plus grand angle avec la direction radiale dans la partie de flanc (7) radialement la plus à l'extérieur et les éléments de surface (9a) formant le plus petit angle avec la direction radiale dans la partie de flanc (7) radialement la plus à l'intérieur.

2. Pneu de véhicule utilitaire selon la revendication 1, **caractérisé en ce que** les flancs de bloc (5) des rainures transversales (3) se composent de trois parties de flanc (7, 8, 9) successives dans la direction radiale.

3. Pneu de véhicule utilitaire selon la revendication 1 ou 2, **caractérisé en ce que** chaque partie de flanc (7, 8, 9) s'étend jusqu'à une profondeur constante (t₇, t₈) dans la direction radiale.

4. Pneu de véhicule utilitaire selon l'une des revendications 1 à 3, **caractérisé en ce que** des lignes de pliage (10, 11) sont formées respectivement sur des saillies de la forme en zigzag et dans des renfoncements de la forme en zigzag, l'angle (α₁, α₂, α₃) que les lignes de pliage (10) forment avec la direction radiale sur les saillies étant, dans chaque partie de flanc (7, 8, 9), supérieur à l'angle (β₁, β₂, β₃) que les lignes de pliage (11) forment avec la direction radiale dans les renfoncements, cet angle étant respectivement le plus grand dans la partie de flanc (7) radialement la plus à l'extérieur et le plus petit dans la partie de flanc (9) radialement la plus à l'intérieur.

5. Pneu de véhicule utilitaire selon la revendication 4, **caractérisé en ce que** dans le cas de trois parties de flanc (7, 8, 9) sur les blocs de flanc (5) des rainures transversales (3), les lignes de pliage (10) sur les saillies s'étendent suivant un angle (α₁) de 25° à 50° par rapport à la direction radiale dans la partie de flanc (7) radialement la plus à l'extérieur, suivant un angle (α₂) de 15° à 35° par rapport à la direction radiale dans la partie de flanc (8) centrale et suivant un angle (α₃) de 2° à 10° par rapport à la direction radiale dans la partie de flanc (9) radialement la plus à l'intérieur.

6. Pneu de véhicule utilitaire selon la revendication 4 ou 5, **caractérisé en ce que** dans le cas de trois parties de flanc (7, 8, 9) sur les blocs de flanc (5) des rainures transversales (3), les lignes de pliage (11) dans les renfoncements s'étendent suivant un angle (β₁) de 20° à 40° par rapport à la direction radiale dans la partie de flanc (7) radialement la plus à l'extérieur, suivant un angle (β₂) de 10° à 20° par rapport à la direction radiale dans la partie de flanc (8) centrale et suivant un angle (β₃) de 0° à 6° par rapport à la direction radiale dans la partie de flanc (9) radialement la plus à l'intérieur.

7. Pneu de véhicule utilitaire selon l'une des revendications 1 à 6, **caractérisé en ce que** dans le cas de trois parties de flanc (7, 8, 9) sur les blocs de flanc (5) des rainures transversales (3), la partie de flanc (7) radialement la plus à l'extérieur s'étend dans la direction radiale jusqu'à une profondeur constante (t₇) de 10 % à 30 % de la profondeur (t₁) de la rainure transversale (3) et la partie de flanc (8) centrale s'étend jusqu'à une profondeur constante (t₈) de 40 % à 70 % de la profondeur (t₁) de la rainure transversale (3).

8. Pneu de véhicule utilitaire selon l'une des revendications 1 à 7, **caractérisé en ce que** les éléments de surface (8a, 9a, 10a) dans chaque partie de flanc (7, 8, 9) se raccordent les uns aux autres suivant des angles obtus (y) de 130° à 170° au niveau des lignes de pliage (10, 11).
